Europäisches Patentamt

**European Patent Office**

**Office européen des brevets**

(11) Veröffentlichungsnummer : **0 098 321**
**B1**

(12) **EUROPÄISCHE PATENTSCHRIFT**

(45) Veröffentlichungstag der Patentschrift :
12.02.86

(21) Anmeldenummer : **82106064.7**

(22) Anmeldetag : **07.07.82**

(51) Int. Cl.⁴ : **G 01 C  5/06**

(54) Kombinierter Luftdruck- und Höhenmesser.

(43) Veröffentlichungstag der Anmeldung :
**18.01.84 Patentblatt 84/03**

(45) Bekanntmachung des Hinweises auf die Patenterteilung : **12.02.86 Patentblatt 86/07**

(84) Benannte Vertragsstaaten :
**AT CH DE FR IT LI**

(56) Entgegenhaltungen :
**FR-A- 2 363 781**
**GB-A- 2 005 837**

(73) Patentinhaber : **HELMUT HUND K.G.**
**Postfach 29 Wetzlarer Strasse 145**
**D-6330 Wetzlar-Nauborn (DE)**

(72) Erfinder : **Hund, Helmut, Ing. grad.**
**Nauborner Strasse 11**
**D-6331 Schöffengrund-Schwalbach (DE)**
Erfinder : **Troussas, Joannis, Dipl.-Ing.**
**Dreieichenweg 17**
**D-6333 Braunfels-Bonbaden (DE)**
Erfinder : **Briem, Alfred, Ing. grad.**
**Ulmenweg 14**
**D-6336 Solms-Niederbiel (DE)**

(74) Vertreter : **Riecke, Manfred**
**Neuköllner Strasse 8**
**D-6333 Braunfels (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft einen kombinierten Luftdruck- und Höhenmesser.

Luftdruck- und Höhenmesser sind an sich bekannt. Diese bekannten Geräte enthalten eine Luftdruck-Meßdose, einen Zeiger, der sich vor mindestens einer Skala verstellt und ein mechanisches Getriebe zwischen Meßdose und Zeiger, das den Zustand der Meßdose auf den Zeiger überträgt. Es handelt sich dabei um rein mechanisch arbeitende Geräte, bei denen die Skala entweder in Druckeinheiten, z. B. in Millibar (mbar) oder in die Höhenlage angebenden Metern (m) geeicht ist. Gewöhnlich sind sogar beide Arten von Skalen am Gerät vorhanden, wobei die Meterskala meist relativ zum Zeiger bzw. zur Druckskala verstellbar ist.

Derartige Geräte gestatten es, mehrere Ablesungen vorzunehmen, nämlich erstens, bei bekannter Höhe, den auf Normal-Null (NN) bezogenen Druck, dann den absoluten Druck am Meßort und schließlich, bei bekanntem absoluten bzw. auf NN bezogenen Druck, die Höhe des Standortes.

Bei diesen bekannten Geräten ist es jedoch ein großer Nachteil, daß die Anzeige eine reine Analoganzeige mit einem Zeiger vor der einen oder anderen Skala ist. Um als Taschengerät brauchbar zu sein, müssen die Geräte klein sein. Dies hat zur Folge, daß auch die Skalen entsprechend klein sein müssen. Dadurch wird das Ablesen der Skalen sehr erschwert, insbesondere für Benutzer, die nicht über sehr gute Augen verfügen.

Aus der FR-A-2 363 781 und der GB-A-2 005 837 ist es bereits bekannt, die Druckwerte in elektrische Signale umzuändern und die Werte digital anzuzeigen. Bei dem kombinierten Druck-Höhenmesser gemäß FR-A-2 363 781 ist darüberhinaus die Einstellung vorwählbarer Drücke bekannt. Es handelt sich bei den in diesen Druckschriften offenbarten Vorrichtungen jedoch um relativ große Geräte, die zum Einsatz in Flugzeugen und auf Flughäfen bestimmt sind. Als Gebrauchsgerät für Bergsteiger, Wanderer oder dgl. sind sie nicht geeignet.

Der Erfindung liegt die Aufgabe zugrunde, diesen Nachteil zu überwinden und einen Luftdruck- und Höhenmesser zu schaffen, der für alle Benutzer gleichermaßen gut ablesbar ist, und der trotzdem in seinen Abmessungen so klein gehalten ist, daß er als Taschengerät gut verwendbar ist.

Diese Aufgabe ist durch einen Taschen-Luftdruck- und Höhenmesser mit einem Gehäuse, das ein Gehäusefenster aufweist und eine Luftdruckmeßdose sowie eine Anzeigevorrichtung enthält, gelöst, der gekennzeichnet ist durch eine Wandler-Vorrichtung zur Umwandlung des auf die Luftdruck-Meßdose einwirkenden Luftdruckes in eine analoge elektrische Spannung ; durch einen elektrischen Schaltungsbaustein mit einer digitalen Anzeigevorrichtung, die eine der analogen elektrischen Spannung entsprechende digitale Anzeige des Luftdruckes bzw. der Höhe liefert ; ferner dadurch daß an dem Gehäuse ein Umschalter angebracht ist, mit dem der Schaltungsbaustein auf Luftdruckanzeige oder auf Höhenanzeige umschaltbar ist, und schließlich dadurch, daß an dem Gehäuse ein Rändelrad vorgesehen ist, mit dem an der digitalen Anzeigevorrichtung ein vorgewählter Luftdruck bzw. eine vorgewählte Höhe einstellbar ist.

Mit dem Luftdruck- und Höhenmesser gemäß der Erfindung erhält man somit eine digitale Anzeige der Werte in stets gleich großen Ziffern, und zwar bei einem Luftdruck-Höhenmesser im Taschenformat. Dadurch entfällt das lästige Ablesen der Werte mittels eines Zeigers vor einer Skala.

Zur Umwandlung des Luftdruckes in eine elektrische Spannung wird eine an sich bekannte Meßdose mit entsprechend dem Luftdruck zwischen einer Lichtquelle und einem Empfänger verschiebbarer Blende benutzt. Diese Spannung wird der Auswerteschaltung zugeführt, deren Kernstück ein Anzeigegerät ist, das bei Anlegen einer Spannung eine entsprechende digitale Anzeige liefert und bei Änderung dieser Spannung eine entsprechend linear geänderte Anzeige aufweist.

Ferner enthält die Auswerteschaltung noch ein Potentiometer, an dem eine Referenzspannung abgreifbar ist sowie einen Komparator, der eine der Differenz zwischen der Luftdruckanalogen Spannung und der Referenzspannung entsprechende Differenzspannung liefert, die dem Anzeigegerät zugeführt wird.

Schließlich ist noch ein Umschalter vorhanden, mit dem der Komparator zwischen die Referenzspannung und die luftdruckanaloge Spannung oder zwischen die Referenzspannung und das Null-Potential der Versorgungsspannung legbar ist.

In der Zeichnung ist der erfundene Luftdruck- und Höhenmesser in einem Ausführungsbeispiel dargestellt.

Es zeigen :

Figur 1 schematisch das Meßgerät in Ansicht,

Figur 2 schematisch die elektrische Schaltung des Gerätes bei Einstellung auf Höhenmessung bzw. Höhenabgleich,

Figur 3 schematisch die elektrische Schaltung des Gerätes bei Schaltung auf Druckanzeige,

Figur 4 schematisch die Schaltung der Fig. 3 jedoch mit Linearisierung, und

Figur 5 schematisch die elektrische Schaltung des Gerätes unter Verwendung eines Mikrocomputers.

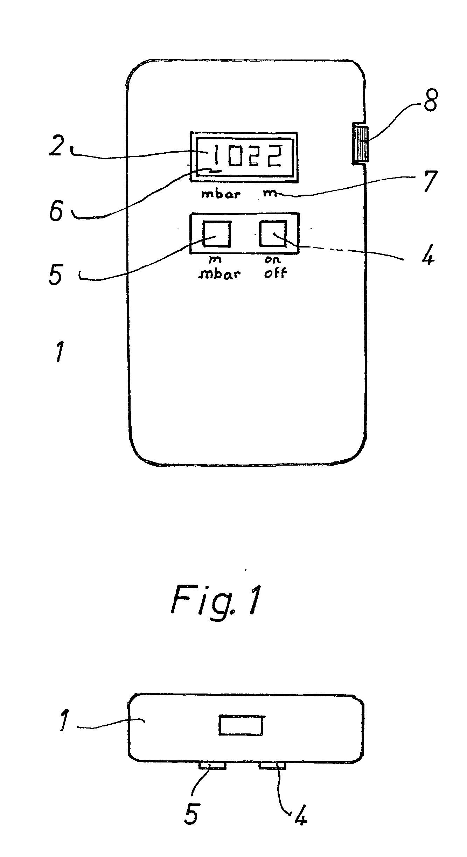

In Fig. 1 ist das Gehäuse des Luftdruck- bzw. Höhenmessers mit 1 bezeichnet.

Durch ein Fenster 2 hindurch ist das Anzeigedisplay eines Anzeigegerätes erkennbar, das z. B. als Flüssigkristallanzeige ausgeführt sein kann. Darunter befinden sich zwei Druckknöpfe 4 und 5. Der Druckknopf 4 dient zum Ein- und Ausschalten des Gerätes. Der Druckknopf 5 ist dagegen mit einem Umschalter verbunden, der den inneren elektrischen Schaltungsbaustein abwechselnd auf Druckmessung auf auf Höhenmessung umschaltet.

Welche Meßart gerade eingeschaltet ist, wird durch einen Strich 6 angezeigt, der im Anzeigedisplay 2 über zwei Markierungen 7 hin und her springt, die mit mbar für die Druckmessung und mit m für die Höhenmessung am Gehäuse 1 gekennzeichnet sind.

Auf der in der Darstellung rechten Seite des Gerätes ist am Gehäuse 1 ein Rändelrad 8 zugänglich, das mit einem im elektrischen Schaltungsbaustein enthaltenen Potentiometer in getrieblicher Verbindung steht. An diesem Rändelrad kann das Gerät auf die Höhe des Meßortes bzw. auf den herrschenden Druck abgeglichen werden, wie noch erläutert werden wird.

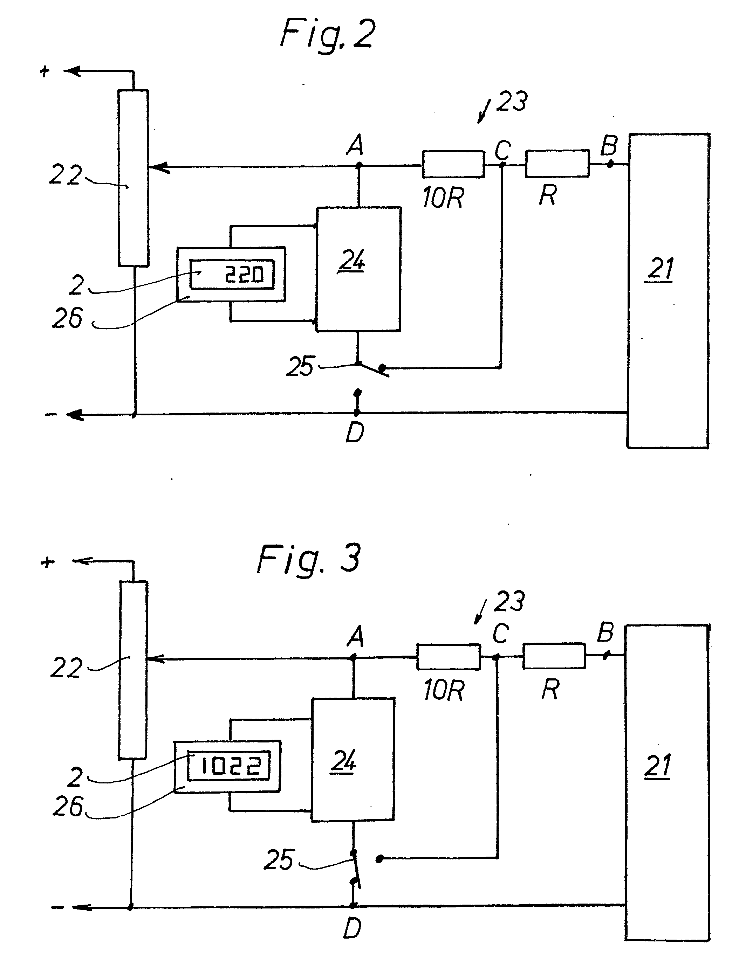

In Fig. 2 ist die Schaltung des elektrischen Schaltungsbausteines in einem Blockschaltbild dargestellt. In dieser Schaltung ist mit 21 die Vorrichtung zur Umwandlung des Luftdruckes in eine elektrische Spannung bezeichnet, die eine dem herrschenden Luftdruck proportionale Spannung ausgibt.

In dem in der Darstellung linken Teil der Schaltung ist ein Potentiometer 22 angeordnet, das an einer Versorgungsspannung liegt. Der Abgriff des Potentiometers ist über einen Spannungsteiler 23 (Teilungsverhältnis 11 : 10) mit dem Ausgang der Vorrichtung 21 verbunden. Dieser Abgriff kann mittels des im Zusammenhang mit Fig. 1 erwähnten Rändelrades 8 verstellt werden.

Außerdem ist noch ein Komparator 24 (= Differenzspannungsmesser) vorgesehen, der mittels eines Umschalters 25 einerseits zwischen die am Potentiometer 22 abgegriffene Referenzspannung und die am Spannungsteiler 23 abgegriffene Teilspannung schaltbar ist, der aber andererseits auch zwischen die Referenzspannung und die Masse der Versorgungsspannung geschaltet werden kann. Diese Umschaltung geschieht mittels des Druckknopfes 5.

Dem Komparator ist ein digitales Anzeigegerät 26 mit Anzeigedisplay 2 nachgeschaltet, das jeweils mit der vom Komparator gemessenen Differenzspannung beaufschlagt wird.

Die in dieser Weise zusammengeschalteten elektrischen Bauteile funktionieren wie folgt :

Zunächst ist es wichtig, daß es sich bei dem Anzeigegerät 26 um ein solches Gerät handelt, das entsprechend der angelegten Spannung eine entsprechende digitale Anzeige liefert und diese Anzeige bei Spannungsänderung linear ändert, wie dies an sich jedes normale Meßgerät tut. Im vorliegenden Ausführungsbeispiel sei angenommen, daß das Anzeigegerät bei Anliegen einer Spannung von 100 mV die Ziffer 100, bei Anliegen von 500 mV die Ziffer 500 usw. zeigt.

Die Vorrichtung 21 liefert entsprechend dem herrschenden Luftdruck eine Spannung. Diese Spannung hängt bei der verwendeten Barometerdose zwar nichtlinear von dem Luftdruck, aber damit linear von der Höhe ab. In gewissen Höhenbereichen kann man jedoch annähernd ein lineares Verhältnis zwischen Druck und Höhe annehmen, wie es in der vorliegenden Erfindung getan wird. Dabei wurde angenommen, daß ein Höhenunterschied von 10 m einer Druckänderung von 1,1 mbar. 1,1 mbar und umgekehrt entspricht.

Bezogen auf eine Höhenänderung von 10 m liefert die Vorrichtung 21 eine Spannungsänderung von 1,1 mV. Dies entspricht durchschnittlich einer Druckänderung von 1,1 mbar. 1,1 mbar, so daß 1 mV Spannungsänderung 1 mbar Druckänderung entspricht.

Unter diesen Voraussetzungen ergeben sich folgende mögliche Messungen :

1. Messung des auf NN bezogenen Luftdruckes bei bekannter Höhenlage des Meßortes : Die Vorrichtung 21 liefert eine dem gerade herrschenden absoluten Druck analoge Spannung $U_1$ von beispielsweise 1 000 mV. Schaltet man nun den Umschalter 25 in die in der Fig. 2 gezeigte Stellung (Höhenmessung), so liegt an dem Komparator einerseits die von der Vorrichtung 21 über den Spannungsteiler 23 gelieferte Spannung an, andererseits liegt aber auch die am Potentiometer 22 abgegriffene Spannung an, und am Ausgang des Komparators steht die Differenz dieser Spannungen an, die auch dem Anzeigegerät 26 zugeführt wird und dort die entsprechende Anzeige hervorruft.

Das Gerät wird nun dadurch auf die Ortshöhe eingestellt, daß der Potentiometerabgriff mittels des Rändelrades 8 soweit verschoben wird, daß im Anzeigedisplay die bekannte Höhe in Metern erscheint. Beispielsweise sei diese Höhe 200 m. Die Zahl 200 kann aber nach dem Vorhergesagten nur erscheinen, wenn die vom Komparator gemessene Spannungsdifferenz 20 mV beträgt, wobei für die Höhenanzeige der Faktor 10 von vornherein durch Aussteuerung einer festen Null in das Anzeigegerät eingeeicht ist und wirksam wird, wenn der Umschalter 25 in die in der Fig. 2 gezeigte Stellung geschaltet wird.

Da aber, wie bereits erwähnt, von der Vorrichtung 21 je 10 m Höhendifferenz nicht genau 1 mV, sondern 1,1 mV abgegeben werden, beträgt bei 200 m Höhendifferenz die Spannungsdifferenz zwischen der Vorrichtung 21 und dem Potentiometer exakt 22 mV. Diese Spannungsdifferenz existiert zwischen den Punkten A und B. Angezeigt werden dürfen aber nur 200 m, die im Anzeige-display bei einer Spannungsdifferenz von 20 mV erscheinen. Folglich muß die Spannung der Vorrichtung 21 herabgesetzt werden. Dies geschieht mittels des Spannungsteilers 23, dessen beiden Widerstände sich in ihrem Widerstandswert wie 10 : 1 verhalten. Die Spannung von 20 mV liegt dann zwischen den Punkten A und C an.

Schaltet man nun den Umschalter 25 auf Druckmessung (Fig. 3), so liegen am Komparator einerseits das 1 022 mV betragende Potential des Potentiometerabgriffes and andererseits das Nullpotential der Versorgungsspannung (= Differenz zwischen den Punkten A und D). Die Spannungsdifferenz beträgt somit 1 022 mV. Die Anzeige im Anzeigegerät lautet demzufolge ebenfalls 1 022, die bei dieser Messung Millibar (mbar) bedeuten und den bei dem gegenwärtigen Druck in 200 m Höhe den auf NN bezogenen Luftdruck angeben.

2. Die Messung des absoluten Druckes in der Höhe des Meßortes. Für diese Messung muß zunächst die Höhenanzeige auf Null eingestellt werden, d. h. es muß in der Schaltung « Höhenmessung » (Fig. 2) der Potentiometerabgriff soweit verschoben werden, bis im Anzeigedisplay die Anzeige O erscheint. Dies ist nur dann der Fall, wenn die Spannungs-differenz zwischen den Punkten A und C (und damit auch zwischen den Punkten A und B) Null beträgt, d. h. wenn am Potentiometer die gleiche Spannung abgegriffen wird, wie sie von der Vorrichtung 21 auf Grund des gerade herrschenden Luftdruckes geliefert wird. Diese Spannung kann man dann im Anzeigedisplay 2 als Druck in mbar zur Anzeige bringen, indem man durch den Umschalter 25 den Komparator mit seinem einen Eingang gegen das Null-Potential der Versorgungsspannung legt (Fig. 3). Die Spannungsdifferenz beträgt dann die volle Potentiometerspannung, die als Millibar angezeigt wird. Diese Anzeige ist gleich dem am Meßort herrschenden absoluten Druck.

Da, wie schon erwähnt, der Druck nicht linear mit der Höhe abnimmt, müssen bei dieser vereinfachten Messung für größere Genauigkeitsansprüche Korrekturwerte bzw. -tabellen für die Druckmessung berücksichtigt werden. Es ist vorgesehen, diese auf der Gehäuserückseite des Gerätes im Siebdruck aufzubringen.

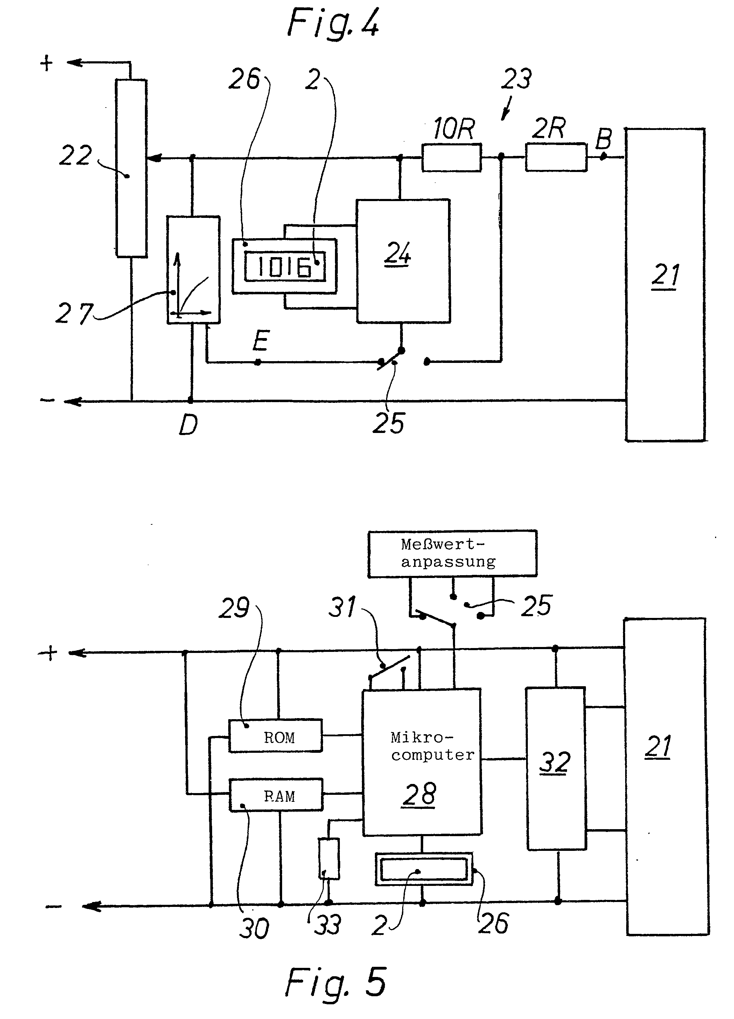

Es ist aber auch möglich, nach dem Abgriff der Spannung am Potentiometer 22 eine Linearisierungsschaltung 27 vorzusehen (Fig. 4). Damit erhält man zwischen den Punkten A und E die linearisierte, druckproportionale Spannung, die dann in Stellung « Druckmessung » des Umschalters 25 an den Komparator gelangt und eine entsprechende Anzeige am Instrument 26 hervorruft. Die Linearisierungsschaltung kann im einfachsten Falle aus einem Netzwerk von Widerständen und Dioden, oder aber aus aktiven Verstärkerschaltungen bestehen. Mit ihr läßt sich ein Fehler bei der Druckmessung auf ein Minimum reduzieren.

Eine weitere Variante des Druck- und Höhenmessers im Taschenformat ist in Fig. 5 dargestellt. Die Vorrichtung 21 liefert in bekannter Weise das höhenanaloge Spannungssignal. Die Umschaltung von Höhen- auf Druckmessung und umgekehrt erfolgt hier über einen Mikrocomputer 28, der auch die Umrechnung der beiden Werte zueinander, je nach voreingestelltem bzw. abgeglichenem Druck- oder Höhenwert vornimmt und durch einen Analog-Digital-Wandler 32 mit der Vorrichtung 21 verbunden ist. Wie später noch erläutert werden wird, wird der jeweils voreingestellte Wert in einem RAM 30 gespeichert. Bei der Druck/Höhen-Umrechnung wird die Nichtlinearität rechnerisch und durch Korrekturwerte, die in einem ROM 29 tabellarisch abgelegt sind, berücksichtigt. Z. B. können im ROM 29 in 10 m-Schritten alle Druckwerte abgespeichert sein, so daß in jeder beliebigen Höhe der Druck exakt angegeben werden kann. Der Mikrocomputer steuert dann direkt die Digitalanzeige 26 an.

Die Einstellung eines bestimmten Druckes oder einer Ortshöhe, auf die dann die Umrechnung bezogen wird, kann in bekannter Weise mit dem Rändelknopf 8 und dem Potentiometer 22 erfolgen, indem dann der dort anstehende Referenzspannungswert über den A/D-Wandler 32 in den Mikrocomputer 28 bzw. ins RAM 30 übernommen wird.

Eine andere Möglichkeit, diesen Wert einzugeben besteht, wie in Fig. 5 dargestellt, darin, durch kurzes oder längerres Drücken auf eine Taste 31, den angezeigten Wert « herauf- oder herunterzuzählen », wie es z. B. vom Stellen digital anzeigender Uhren her bekannt ist. Diese Möglichkeit hat den Vorteil, daß die relativ aufwendige elektromechanische Einstellung über Rändelknopf und Potentiometer entfallen kann.

Die Umschaltung von Höhen- auf Luftdruckanzeige geschieht bei dem den Mikrocomputer verwendenden Ausführungsbeispiel ebenfalls durch einen Umschalter 25, der an einen oder mehrere Eingänge des Mikrocomputers 28 angeschlossen ist. Hierbei sind sogar zwei Schaltstellungen für den Luftdruck vorgesehen : Absolutwert und auf NN bezogenen Wert. Ein Einstellen der Höhenanzeige auf O zum Ablesen des Absolutdruckes entfällt damit.

Eine weitere Variante der Lösung mit Mikrocomputer besteht im zusätzlichen Einbau eines Temperaturfühlers 33 in das Gerät, der wie eine Teleskopantenne aus dem Gerät herausgezogen werden kann und damit die Temperatur der Umgebungsluft aufnimmt, dieselbe in eine analoge Spannung umsetzt und über den A/D-Wandler 32 als Digitalinformation an den Mikrocomputer 28 gibt. Durch eine weitere Umschaltstellung des Schalters 25 läßt sich dann auch die Temperatur in die Anzeige 26 abrufen. Ebenso dient die eingelesene Temperaturinformation automatisch zur Korrektur der angezeigten Höhen- oder Druckwerte, die sich ja nur auf das genormte Temperaturgefälle in Abhängigkeit von der Höhe beziehen.

Weicht die tatsächliche Umgebungstemperatur von der in der Normverteilung für die betreffende Ortshöhe festgelegten Temperatur ab, müssen Korrekturen durchgeführt werden, da sich ja der Luftdruck bekanntlich mit der Temperatur verändert.

## Patentansprüche

1. Taschen-Luftdruck- und Höhenmesser mit einem Gehäuse (1), das ein Gehäusefenster (2) aufweist und eine Luftdruckmeßdose sowie eine Anzeigevorrichtung (26) enthält, gekennzeichnet durch folgende Merkmale :

a) eine Wandler-Vorrichtung (21) zur Umwandlung des auf die Luftdruck-Meßdose einwirkenden Luftdruckes in eine analoge elektrische Spannung,

b) einen elektrischen Schaltungsbaustein mit einer digitalen Anzeigevorrichtung (26), die eine der analogen elektrischen Spannung entsprechende digitale Anzeige des Luftdruckes bzw. der Höhe liefert,

c) an dem Gehäuse (1) ist ein Umschalter (5 ; 25) angebracht, mit dem der Schaltungsbaustein auf Luftdruckanzeige oder auf Höhenanzeige umschaltbar ist, und

d) an dem Gehäuse (1) ist ein Rändelrad (8) vorgesehen, mit dem an der digitalen Anzeigevorrichtung (26) ein vorgewählter Luftdruck bzw. eine vorgewählte Höhe einstellbar ist.

2. Taschen-Luftdruck- und Höhenmesser nach Anspruch 1, gekennzeichnet durch folgende Merkmale :

a) die digitale Anzeigevorrichtung (26) ändert bei linearer Spannungsänderung die Anzeige ebenfalls linear,

b) mit dem Rändelrad (8) ist ein Potentiometer (22) verbunden, an dem eine Referenzspannung abgreifbar ist,

c) es ist ein Komparator (24) vorhanden, der mittels des Umschalters (5 ; 25) wahlweise einerseits zwischen die Referenzspannung und die luftdruckanaloge Spannung und andererseits zwischen die Referenzspannung und das Nullpotential der Versorgungsspannung schaltbar ist, und dessen Ausgangsspannung der digitalen Anzeigevorrichtung (26) zuführbar ist.

3. Taschen-Luftdruck- und Höhenmesser nach den Ansprüchen 1 und 2, dadurch gekennzeichnet, daß der Wandler-Vorrichtung (21) ein Spannungsteiler (23) nachgeschaltet ist, der die von der Wandler-Vorrichtung (21) gelieferte luftdruckabhängige Spannung in einem festen Verhältnis, vorzugsweise im Verhältnis 11 : 10 teilt, und daß dem Komparator (24) diese Teilspannung zuführbar ist.

4. Taschen-Luftdruck- und Höhenmesser nach den Ansprüchen 1-3, dadurch gekennzeichnet, daß eine Linearisierungseinrichtung (27) vorgesehen ist, über welche die am Potentiometer (22) eingestellte Referenzspannung an den Komparator (24) legbar ist.

5. Taschen-Luftdruck- und Höhenmesser nach Anspruch 1, gekennzeichnet durch folgende Merkmale :

a) der Schaltungsbaustein enthält einen Mikrocomputer (28),

b) der Schaltungsbaustein enthält ferner einen Analog-Digital-Wandler (32), über den der von der Wandler-Vorrichtung (21) gewonnene elektrische Spannungswert in den Mikrocomputer eingelesen wird,

c) mit einem oder mehreren Eingängen des Mikrocomputers (28) ist der Umschalter (25) in der Weise verbunden, daß von Höhenmessung auf Messung des absoluten Luftdruckes und auf Messung des auf Meereshöhe bezogenen Luftdruckes umgeschaltet werden kann, wodurch entsprechende Umrechnungsvorgänge im Mikrocomputer (28) auslösbar sind, die u. a. die nichtlineare Abhängigkeit des Luftdruckes von der Höhe berücksichtigen,

d) es ist ein RAM (30) vorgesehen, in dem dieser korrigierte Höhenwert gespeichert wird, so daß er als Referenzwert für die darauffolgende Höhenmessung zur Verfügung steht, und

e) es ist ferner ein ROM (29) vorgesehen, in dem die Korrekturwerte des Luftdruckes für die einzelnen Ortshöhen abgespeichert sind.

6. Taschen-Luftdruck- und Höhenmesser nach Anspruch 5, dadurch gekennzeichnet, daß statt des Rändelrades (8) eine Taste (31) vorgesehen ist, mit der ein vorwählbarer Luftdruck bzw. eine vorwählbare Höhe dadurch einstellbar ist, daß bei Drücken der Taste der abgespeicherte Wert an der digitalen Anzeigevorrichtung (26) herunter- bzw. heraufzählt.

7. Taschen-Luftdruck- und Höhenmesser nach einem der Ansprüche 5 oder 6, dadurch gekennzeichnet, daß zur zusätzlichen automatischen Korrektur des Luftdruckes und/oder der Höhe ein herausziehbarer Temperaturfühler vorhanden ist, dessen Signal über den A/D-Wandler (32) dem Mikrocomputer (28) zuführbar ist.

**Claims**

1. Pocket barometer and altimeter comprising a housing (1), an opening (2) in said housing, an atmospheric pressure gauge and indicating means (26) characterized by the following elements :

a) a transformer (21) for transforming the atmospheric pressure impact on said pressure gauge into an analogous electrical voltage ;

b) an electric circuit element including digital indicating means (26) providing a digital reading of the atmospheric pressure or the altitude respectively in correspondence to the analogous electrical voltage ;

c) the housing (1) being provided with switch-over means (5 ; 25) for switching the electrical circuit element to an atmospheric pressure reading or an altitude reading, and

d) the housing (1) being provided with a knurled knob (8) by means of which the digital indicating means (26) may be set to a preselected atmospheric pressure or to a preselected altitude respectively.

2. Pocket barometer and altimeter as claimed in Claim 1 characterized in that

a) upon a linear change of the electric voltage the digital indicating means (26) changes its reading also linearly ;

b) to the knurled knob (8) a potentiometer (22) is connected from which a reference voltage is obtained ;

c) a comparator (24) is provided which by means of the switch-over means (5 : 25) may optionally be connected either between the reference voltage and the voltage analogous to the

atmospheric pressure or between the reference voltage and the zero potential of the current supply, the output voltage of said comparator being supplied to the digital indicating means (26).

3. Pocket barometer and altimeter as claimed in the Claims 1 and 2, characterized in that the transformer (21) is in the circuit followed by a voltage divider (23) for dividing the voltage analogous to the atmospheric pressure as supplied by said transformer in a fixed ratio, preferably in a ratio 11 : 10, and that said voltage ratio is supplied to said comparator (24)

4. Pocket barometer and altimeter as claimed in the Claims 1-3, characterized in that a linearing element (27) is provided via which the reference voltage set at the potentiometer (22) is fed to the comparator (24).

5. Pocket barometer and altimeter as claimed in Claim 1 characterized in that

a) the electric circuit element comprises a micro-computer (28) ;

b) the electric circuit element further includes an analog to digital converter (32) through which the electric voltage obtained from the transforming device (21) is supplied to the micro-computer ;

c) the switch-over means (25) is so connected to one or more input terminals of said micro-computer (28) that the measurement can be switched over from measurement of the altitude to measurement of the absolute atmospheric pressure and to measurement of the atmospheric pressure reduced to sea level, thereby triggering the corresponding calculating processes in said microcomputer (28) which, amongst others, take into account the non-linear dependence of the atmospheric pressure on the altitude ;

d) there is provided a RAM (30) for storing said corrected altitude value so that the latter is available as a reference value for a subsequent altitude measurement, and

e) there is further provided a ROM (29) for storing the individual correction values of the atmospheric pressure for the altitude of different preselected places.

6. Pocket barometer and altimeter as claimed in Claim 5 characterized in that instead of the knurled knob (8) there is provided a key (31) by means of which an atmospheric pressure or an altitude may be preselected in such a manner that upon ressuring of the key the stored value in the digital indicating means (26) counts up or down.

7. Pocket barometer and altimeter as claimed in one of the Claims 5 or 6, characterized in that for an additional automatic correction of the atmospheric pressure and/or the altitude a pull-out temperature detector is provided of which the measured value is supplied to the micro-computer (28) via the analog to digital converter (32).

**Revendications**

1. Altimètre-baromètre combiné de poche, dont le boîtier (1) est pourvu d'une lucarne (2) et contient une boîte de mesure de la pression atmosphérique et un dispositif d'affichage (26), caractérisé en ce que :

a) un convertisseur (21) transforme la pression de l'air régnant dans la boîte de mesure en une tension électrique analogique ;

b) un module de commutation électrique pourvu d'un dispositif d'affichage numérique (26) fournit un affichage numérique de la pression atmosphérique ou de l'altitude correspondant à la tension électrique analogique ;

c) le boîtier (1) est pourvu d'un inverseur (5 ; 25) permettant d'inverser le module de commutation entre l'affichage de la pression atmosphérique et l'affichage de l'altitude et,

d) le boîtier (1) est pourvu d'une molette (8) à l'aide de laquelle on peut faire apparaître une altitude prédéterminée sur l'affichage numérique (26).

2. Altimètre-baromètre combiné de poche suivant la revendication 1, caractérisé en ce que :

a) le dispositif d'affichage numérique (26) modifie linéairement la valeur affichée en cas de modification linéaire de la tension,

b) la molette (8) est reliée à un potentiomètre (22) sur lequel une tension de référence est disponible,

c) il est prévu un comparateur (24) qui peut être branché au choix, à l'aide de l'inverseur (5, 25), soit entre la tension de référence et la tension analogique engendrée par la pression atmosphérique, soit entre la tension de référence et le potentiel zéro de l'alimentation, et dont la tension de sortie peut être appliquée au dispositif d'affichage numérique (26).

3. Altimètre-baromètre combiné de poche suivant les revendications 1 et 2, caractérisé en ce qu'un diviseur de tension (23) est monté en aval du convertisseur (21), qu'il divise la tension correspondant à la pression atmosphérique fournie par le convertisseur (21) selon un rapport fixe, de préférence 11 : 10, et que cette tension partielle est applicable au comparateur (24).

4. Altimètre-baromètre combiné de poche selon les revendications 1 à 3, caractérisé en ce qu'il comporte un dispositif de linéarisation (27) via lequel la tension de référence déterminée à l'aide du potentiomètre (22) peut être appliquée au comparateur (24).

5. Altimètre-baromètre combiné de poche selon la revendication 1, caractérisé en ce que :

a) le module de commutation comporte un micro-ordinateur (28) ;

b) le module de commutation comporte également un convertisseur analogique-numérique (32) par l'intermédiaire duquel le micro-ordinateur lit la valeur de la tension électrique fournie par le convertisseur (21) ;

c) l'inverseur (25) est relié à une ou plusieurs entrées du micro-ordinateur (28) de manière telle qu'il est possible de passer de la mesure de l'altitude à la mesure de la pression atmosphérique absolue et à la mesure de la pression atmosphérique réduite au niveau de la mer, ce qui déclenche dans le micro-ordinateur (28) les processus de conversion nécessaires, qui tiennent compte entre autres de la relation non linéaire entre la pression de l'air et l'altitude,

d) il est prévu une mémoire morte (RAM) (30) dans laquelle la valeur corrigée de l'altitude est stockée pour servir de référence aux mesures suivantes de l'altitude et,

e) il est prévu une mémoire vive (ROM) (29) dans laquelle s'enregistrent les valeurs corrigées de la pression atmosphérique aux différentes altitudes locales.

6. Altimètre-baromètre combiné de poche selon la revendication 5, caractérisé en ce qu'il est prévu au lieu de la molette (8) une touche (31) au moyen de laquelle une pression atmosphérique ou une altitude prédéfinissables peuvent être ajoutées ou retranchées sur l'affichage numérique (26).

7. Altimètre-baromètre combiné de poche selon l'une quelconque des revendications 5 ou 6, caractérisé en ce qu'il est prévu, en vue d'une correction automatique supplémentaire de la pression atmosphérique et/ou de l'altitude, un capteur de température extensible dont le signal peut être transmis au micro-ordinateur (28) via le convertisseur analogique-numérique (32).

Fig. 1

## Fig. 2

## Fig. 3

## Fig. 4

## Fig. 5